# EUROPÄISCHE PATENTSCHRIFT

(11) **EP 2 095 196 B1**
(45) Veröffentlichungstag und Bekanntmachung des Hinweises auf die Patenterteilung: **02.08.2017**
(21) Anmeldenummer: 07819581.5
(22) Anmeldetag: 05.11.2007
(51) Int. Cl.: G05B 23/02

(54) **SYSTEM UND VERFAHREN ZUR VERLUSTFREIEN VERARBEITUNG VON PROZESSWERTEN EINER TECHNISCHEN ANLAGE ODER EINES TECHNISCHEN PROZESSES**
SYSTEM AND METHOD FOR THE LOSS-FREE PROCESSING OF PROCESS VALUES OF A TECHNICAL INSTALLATION OR A TECHNICAL PROCESS
SYSTÈME ET PROCÉDÉ DE TRAITEMENT SANS PERTE DE DONNÉES DE PROCESSUS D'UNE INSTALLATION TECHNIQUE OU D'UN PROCESSUS TECHNIQUE

(30) Priorität: 13.11.2006 DE 102006053699; 09.08.2007 DE 102007040675
(43) Veröffentlichungstag der Anmeldung: 02.09.2009
(73) Patentinhaber: ABB Schweiz AG, 5400 Baden (CH)
(72) Erfinder: HANKING, Heino, 32429 Minden (DE)
(74) Vertreter: Marks, Frank
(86) Internationale Anmeldenummer: PCT/EP2007/009559
(87) Internationale Veröffentlichungsnummer: WO 2008/058648

(56) Entgegenhaltungen:
- US-A1- 2005 251 276
- US-A1- 2006 106 508
- BARR D C: "The use of a data historian to extend plant life" LIFE MANAGEMENT OF POWER PLANTS, 1994., INTERNATIONAL CONFERENCE ON EDINBURGH, UK, LONDON, UK,IEE, UK, 1994, Seiten 35-39, XP006527431 ISBN: 0-85296-627-X

## Beschreibung

Die Erfindung bezieht sich auf ein Verfahren zur verlustfreien Verarbeitung von Prozesswerten, auch als Prozessmesswerte oder Prozessdaten bezeichnet, eines technischen Prozesses oder einer technischen Anlage, welches insbesondere in der Prozessautomatisierung eingesetzt wird. Weiterhin betrifft die Erfindung ein System zur Ausführung des Verfahrens.

Zur Langzeitarchivierung von Prozesswerten, auch als Prozessmesswerten oder Prozessdaten bezeichnet; werden die Daten als Messreihen, auch als Messwerthistorien oder Prozesswerthistorien bezeichnet, in einem sogenannten Historienserver abgelegt bzw. gespeichert. Die Archivierung der Daten ist dabei sehr speicherintensiv. Zum Auslesen der gespeicherten Daten ist demzufolge ein Massenspeicher mit einem sehr großen Speicherbereich erforderlich und bei der Weiterverarbeitung der ausgelesenen Daten muss eine große Anzahl von Daten bewegt werden. Der zu speichernde Datenbestandes setzt sich dabei aus dem Produkt aus Anzahl der Signale, deren zu erwartenden Änderungsgeschwindigkeit und deren Aufzeichnungsdauer zusammen.

Der vom Betreiber der technischen Anlage benötigte Datenbestand aus dem Prozess, welcher zur Archivierung gespeichert werden soll, ist in den letzten Jahren stark gestiegen und es besteht der Wunsch die Daten einerseits verlustfrei zu speichern und andererseits diese mit einer möglichst hohen Geschwindigkeit wieder zu lesen. Diese Wünsche lassen sich mit einer einfachen Speicherung im unkomprimierten Rohformat erfüllen. Dem steht nun aber der Nachteil gegenüber, dass mit diesem Prinzip der Rohwertspeicherung der zur Verfügung stehende Massenspeicher nicht optimal genutzt wird. Der zu speichernde Rohdatenbestand liegt gegenwärtig im Bereich von 0,5 bis ca. 5 Terabyte, wobei die Tendenz, bezogen auf den zu speichernden Datenbestand, weiter steigend ist.

Obwohl relativ günstige Massenspeicher zur Ablage der aus dem Prozess oder der Anlage anfallenden Datenmengen zur Verfügung stehen, wird der Einsatz von Kompressionsverfahren zur Ablage großer Datenmengen in der Prozessautomatisierung angestrebt, wobei ein Kompressionsverfahren wünschenswert wäre, welches die Ziele zur verlustfreien Speicherung der Daten und besonders diese Daten mit einer möglichst hohen Geschwindigkeit wieder auszulesen, optimal vereint. Dabei ist ein weniger optimaler Kompressionsfaktor hinnehmbar.

Zur Datenkompression der aus dem Prozess oder der Anlage anfallenden Datenmengen werden gegenwärtig verlustfreie oder verlustbehafteten Verfahren eingesetzt.

Bei den bekannten verlustbehafteten Kompressionsverfahren, zu denen BoxCar/Backslope-, Trarisformationsverfahren zählen, stehen nach der Dekompression die vorab komprimierten Daten mit mehr oder weniger starken Abweichungen bezüglich des Messwertes und des Zeitstempels wieder zur Verfügung.

Die BoxCar/Backslope-, Swinging Door- oder Wavelet- Transformationsverfahren sind beispielsweise in **"http://med.ee.nd.edu/MED7/med99/papers/MED101.pdf"** (Automatic Tuning of Window Size in the Box Car Backslope Data Compression Algorithm), **"http://training.osisoft.comINR/rdonlyres/5547CC68-65AD-4E55-A365-B30C1FCF74F9/0/SwingingDoorCompression.doc"** (Swinging Door Compression), und **"http://de.wikipedia.org/wiki/Wavelet"** (Wavelets und Transformationen) beschrieben.

Diese Verfahren bieten eine gute Kompressionsrate, sind aber nicht verlustfrei. Außerdem verlangsamt sich auf Grund der abzuarbeitenden Datenmenge der Lesevorgang erheblich gegenüber dem Auslesen der in nicht- verdichteter Form abgelegten Daten.

Auch die aus der der verlustfreien Komprimierung bekannten Methoden, wie die LZW-, LZ77- oder LZ78- Verfahren (hier wird eine Folge von Zeichen des Originaltextes durch eine Folge von Zeichen eines anderen Alphabets ersetzt), die beispielsweise in **http://de.wikipedia.org/wiki/LZ77-Datenkompression** und **http://de.wikipedia.org/wiki/LZ78**
beschrieben sind, liefern bei den aus dem Prozess oder der Anlage bereitgestellten und zu speichernden Rohdaten nur unbefriedigende Kompressionsraten und sind zudem beim Entpacken für viele Anwendungen in der Prozessautomatisierung zu langsam.

Bei den sogenannten verlustbehafteten Kompressionsverfahren ist dagegen die Kompressionen der anfallenden Daten mit einem Informationsverlust verbunden, weil sich die ausgelesenen oder dekomprimierten Daten von den ursprünglichen Daten unterscheiden.

Gerade im Umfeld von Prozess- oder Anlageninformationssystemen, welche die archivierten Daten oft als abrechnungsrelevante Basis, beispielsweise wenn also im Büroumfeld möglichst genaue Messungen aus dem Prozessumfeld als Basis für Bilanzierungen dienen, so darf hier kein verlustbehafteter Wert verwendet werden, nutzen oder bezogen auf diese Daten im nachhinein Analysen exakt auf die Abtastzeitpunkte der Prozessdaten zu fahren, sind die vorab beschriebenen verlustbehaftete Verfahren nicht geeignet.
Ein weiterer Nachteil der verlustbehafteten Verfahren beruht darauf, dass die Dekompression der Daten, auch als Entpacken bezeichnet, sehr rechenintensiv ist. Bei den großen zu verarbeitenden Datenmengen wirkt sich eine Kompression daher eher hinderlich aus, da die Dekompression der Daten einfach lange dauert. Das Dokument "The use of a data historian to extend plant life" Barr D C , LIFE MANAGEMENT OF POWER PLANTS, 1994, CONFERENCE PUBLICATION, EDINBURGH, UK , Seiten 35-39 beschreibt ein Verfahren zur Verlustfreien Bearbeitung von Daten. Der Erfindung liegt demgemäß die Aufgabe zugrunde, ein Verfahren zur verlustfreien Verarbeitung von Prozesswerten, auch als Prozessmesswerte oder Prozessdaten bezeichnet, eines technischen Prozesses oder einer technischen Anlage sowie ein entsprechendes System zur Ausführung des Verfahrens anzugeben, wodurch vorgenannte Nachteile des Standes der Technik überwunden werden. Mit dem erfindungsgemäßen Verfahren zur Datenkompression soll insbesondere das Entpacken der komprimierten Daten beschleunigt werden. Außerdem ist es im Gegensatz zu den meisten verwendeten Verfahren verlustfrei.
Diese Aufgabe wird erfindungsgemäß durch ein Verfahren mit den in Anspruch 1 angegebenen Merkmalen gelöst. Vorteilhafte Ausgestaltungen und Verbesserungen des erfindungsgemäßen Verfahrens sowie ein System zur Ausführung des Verfahrens sind in weiteren Ansprüchen und in der Beschreibung angegeben.
Die Erfindung betrifft ein Verfahren, welches die Tatsache einer stets verlustbehafteten Erfassung von digitalisierten Prozesswerten einer technischen Anlage ausnutzt, um in einem nachgeschalteten speziellen verlustfreien Kompressionsverfahren zu einer optimalen Mischung hinsichtlich Komprimierungsrate und Entpackungsgeschwindigkeit von Prozessdaten in einem Prozessleitsystem einer technischen Anlage oder eines technischen Prozesses zu gelangen.
Erfindungsgemäß werden die aus der technische Anlage oder dem technischen Prozess bereitgestellten Prozesswerte als Rohdaten mittels einer Erfassungseinheit erfasst, und den erfassten Rohdaten werden jeweils eine physikalische Einheit und ein Messbereich zugeordnet. Die so erzeugten archivierbaren Rohdaten werden dahingehend geprüft, ob sie innerhalb eines vorgegebenen Toleranzbandes liegen. Mittels einer Archivierungsfunktion werden die innerhalb des vorgegebenen Toleranzbandes befindlichen archivierbaren Daten ausgewählt und in ihrem ursprünglichen, also noch nicht komprimierten Datenformat, auch als Rohdatenformat bezeichnet, als ausgewählte Daten in einem Historienserver gespeichert.

Der Historienserver ist eine spezielle Datenbank mit Echtzeitfunktionen zur Sammlung von Prozess- oder Messdaten zur Langzeitspeicherung und zur Archivierung der gesammelten Daten, wobei die gesammelten Daten in festgelegten Zeitabständen auf einer Festplatte eines Protokollspeichers gespeichert werden.

Die im Rohdatenformat vorliegenden ausgewählten Daten werden mittels eines vom Historienserver bereitgestellten Codiermoduls zeitverzögert zu ihrer Speicherung im Historienserver komprimiert, wobei aus den komprimierten Daten eine komprimierte Datei erzeugt wird.

Um die Daten der komprimierten Datei dem Prozessleitsystem zur weiteren Verarbeitung, beispielsweise zur Anzeige des Verlaufes eines Prozesswertes über einen vorgegebenen Zeitbereich, zur Verfügung zu stellen, werden die Daten der komprimierte Datei nach einer Anforderung mittels eines vom Historienserver bereitgestellten Decodiermodul dekomprimiert. Die Anforderung zum Dekomprimieren der komprimierten Datei und zur Bereitstellung weiterer verfügbarer Daten im Rohdatenformat wird vom Prozessleitsystem automatisch oder ereignisabhängig bereitgestellt.

Die vom Decodiermodul bereitgestellten dekomprimierten Daten sowie weitere während der Erzeugung der komprimierten Datei aus dem Prozess oder von der Anlage eingelesene Daten im Rohdatenformat werden, vorzugsweise einem Darstellungsmodul, zur weiteren Verarbeitung übermittelt.

Mit dem erfindungsgemäßen Verfahren wird insbesondere die Langzeitarchivierung von Prozesswerthistorien, die aus den von fortlaufend erfassten Prozesswerten gebildet werden, dahingehend verbessert, dass die Prozesswerte nicht nur verlustfrei komprimiert werden sondern auch eine möglichst gute Packungsdichte der komprimierten Daten erreicht wird. Im Gegensatz zu den verlustbehafteten Verfahren sind alle abrechnungsrelevanten Daten exakt ohne einen Verlust ihrer Originalinformation wiederherstellbar.

Die Speicherung der Rohdaten in ihrem ursprünglichen nicht komprimierten Datenformat im Historienserver erfolgt zeitlich gesplittet in jeweils eigenständigen Dateien pro Messwert, typischerweise in sogenannten zwei Tages-Dateien eine ohne Komprimierung der Rohdaten.

Im folgenden wird die Speicherung der Rohdaten im Historienserver mittels spezieller Techniken beschrieben.

In einem Historienserver sind für tausende von verschiedenen Messpunkten, auch als Signale bezeichnet, jeweils die historischen Messwertreihen zu speichern. Indem diese historischen Messwertreihen eines Messpunktes wie einzelne Teildatenbanken behandelt werden, wird eine effektive Speicherung der historische Messwertreihen in einem Standard- Filesystem folgendermaßen ermöglicht: Pro Signal-Teil-Datenbank oder Messwertreihe eines Signals) wird ein eigener Ordner im Filesystem genutzt. Die Signal-Teil-Datenbänke sind so über eine beliebige Anzahl von Festplatten verteilbar, wodurch eine noch höhere Performance und zusätzliche Redundanz-Aspekte erreicht werden.

Weiterhin ist die Einführung eines Kurzeit-Schreib/Lesecaches im RAM für jedes Signal vorgesehen. Der Kurzeit-Schreib/Lesecache ist bereits für die interne SQL-Maschine "sichtbar", wodurch die Werte für Clientanfragen verzögerungsfrei verfügbar sind.

Durch die Einführung eines Cache-Flush-Prozesses wird eine sogenannte "festplatten-freundliche" Entleerung der Kurzeit Schreib/Lesecaches gesteuert. Dazu bewirkt der Cache-Flush-Prozess das komplette Zurückschreiben des Cache-Inhaltes in einen Hauptspeicher. Danach steht der nun leere Signal-Cache wieder zur Erfassung der nächsten Werte zur Verfügung.

Der Cache-Flush-Prozess steuert weiterhin eine individuelle dynamische Cache-Größe in Abhängigkeit von der Signalgeschwindigkeit. Beispielsweise werden den sogenannten schnellen Signalen viele Werte pro Zeiteinheit zugeordnet. Diesen Signalen werden größere Kurzzeitcaches zugeteilt. Langsame Signale hingegen geben dabei nach und nach ihren Cache-Speicher an schnelle Signale ab.

Der somit zeit- und füllgrad- gesteuerte Cache-Flush-Prozess arbeitet so, dass möglichst wenige Datenzugriffe notwendig sind, bzw. der Datenzugriff möglichst gleichmäßig verteilt erfolgt. Dadurch wird in vorteilhafter Weise erreicht, dass auch bei Standard- Filesystemen, wie dem New Technology File System (NTFS), eine optimale Performance beim Lesen und Schreiben der Daten gegeben ist.

Das mittels des Codiermoduls ausgeführte Komprimierverfahren arbeitet unabhängig in einem nebenläufigen Prozess und kodiert verzögert zur eigentlichen Archivierung die Rohdaten, dass heißt die Prozesswerte werden erst im Rohdatenformat gespeichert und nach und nach mit einer konfigurierbaren Verzögerung in diesem nebenläufigen Prozess in ein komprimiertes Format umgewandelt, wobei aus den komprimierten Daten eine komprimierte Datei erzeugt wird.

Der sich daraus ergebende Vorteil beruht darauf, dass die zeitliche Verzögerung der Kompression der Rohdaten so steuerbar ist, dass beispielsweise über einen längeren Zeitraum mit Rohwerten gearbeitet wird, weil typischerweise in diesem Zeitraum vermehrt Zugriffe angefordert werden, beispielsweise bei der Erstellung von Tagesreports und Trends, und hier also ohne Decodierung und damit schnell auf das Speichermedium zugegriffen werden kann.

In vorteilhafter Weise ist die zeitliche Verzögerung der Kompression der Rohdaten individuell für einzelne Prozesswerte oder Gruppen bzw. Klassen von Prozesswerten einstellbar. Beispielsweise werden eine Klasse von abrechnungsrelevanten Daten über einige Jahre im Rohdatenformat gehalten, bevor die Komprimierung dieser Daten gestartet wird.

Aus obiger Kenntnis heraus ist nun ein weiterer nebenläufiger Prozess (Modul KompressDelayKonfigurator) mit der automatischen Ermittlung der Kompressionsverzögerungen beauftragt und läuft nach folgendem Prinzip ab:

Der Historienserver stellt intern Zugriffsstatistiken für jedes Signal bereit. Diese Zugriffsstatistiken beinhalten beispielsweise, wer im Bezug zur aktuellen Uhrzeit mit welchen Historienzeiträumen auf die einzelnen Zeitreihen zugegriffen hat. Auf der Basis dieser Daten ermittelt das Modul KompressDelayKonfigurator eine optimale Verzugszeit.

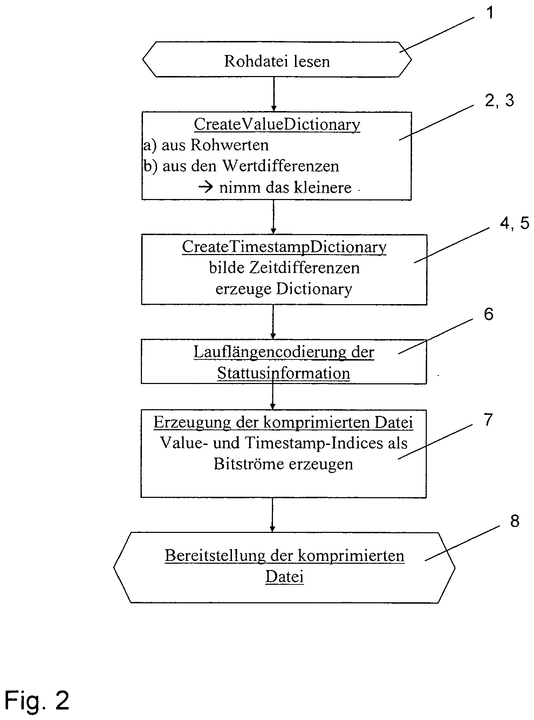

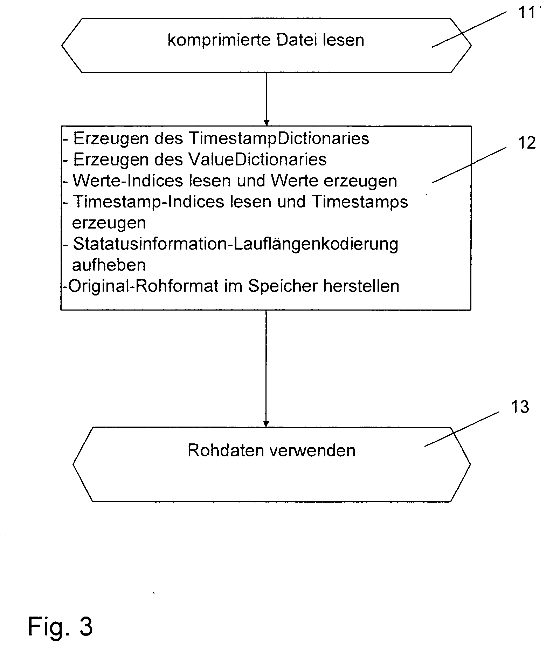

Ein weiterer Vorteil der Erfindung beruht auf einem schnell ablaufenden Entpackungsalgorithmus der komprimierten Daten, welcher der Umkehrung des in Fig. 2 beschriebenen Packalgorithums und des in Fig. 3 beschriebenen Entpackalgorithmus entspricht, und wodurch die Geschwindigkeit beim Entpacken der komprimierten Daten deutlich reduziert wird ohne dabei die Funktion des Historienservers einzuschränken.

Das System zur Ausführung des erfindungsgemäßen Verfahrens ist dem Anspruch 7 zu entnehmen.

Das erfindungsgemäße System zur verlustfreien Verarbeitung von Prozesswerten ist in einem Prozessleitsystem einer technischen Anlage oder eines technischen Prozesses integriert und umfasst eine Erfassungseinrichtung, welche die aus dem Prozess oder der Anlage bereitgestellten Prozesswerte als Rohdaten erfasst. Die Erfassungseinheit wirkt mit einer Verarbeitungseinheit zusammen, die aus den erfassten Rohdaten nach Zuordnung einer physikalischen Einheit und eines Messbereiches zum jeweiligen Prozesswert archivierbare Daten erzeugt.

Die Verarbeitungseinheit wirkt mit einer Archivierungsfunktion zusammen, welche prüft, ob die archivierbaren Daten ein vorgegebenes Toleranzband überschreiten. Die Archivierungsfunktion prüft somit jeden eingehenden Prozesswert, ob dieser das vorgegebene Toleranzband überschreitet. Weiterhin wählt die Archivierungsfunktion die innerhalb des Toleranzbandes befindlichen archivierbaren Daten aus und speichert die ausgewählten Daten in einem Rohdatenformat ohne eine Komprimierung, dass heißt, jeder eingehende Prozesswert, der innerhalb des vorgegebenen Toleranzbandes liegt, wird als Rohwert, beispielsweise in den 2-Tagesdateien im Rohdatenformat, umfassend einen Zeitstempel, einen Wert im IEEE-Double-Format und einen Status im 16 Bit Integer Format (Dateityp, der ganzzahlige Werte speichert) in einem Historienserver gespeichert.

Der Historienserver weist ein Codiermodul zur Komprimierung der ausgewählten Daten auf. Das Codiermodul komprimiert fortlaufend die im Rohdatenformat vorliegenden ausgewählten Daten zeitverzögert zu ihrer Speicherung im Historienserver.

Der entkoppelt und individuell verzögert ablaufende Codierprozess im HistorienServer komprimiert nun nach und nach die im Rohdatenformat gespeicherten Daten.

Nach einer automatischen oder ereignisabhängigen Anforderung werden die komprimierten Daten direkt einem Decodiermodul zur Dekomprimierung zugeführt und die dekomprimierten Daten sowie weitere verfügbare Daten im Rohdatenformat werden einem Darstellungsmodul, beispielsweise einem Modul zur Trenddarstellung zur weiteren Verarbeitung und/oder Anzeige bereitstellt.

Das erfindungsgemäße System und Verfahren werden vorzugsweise zur Langzeitarchivierung von Messreihen in der Automatisierungstechnik eingesetzt.

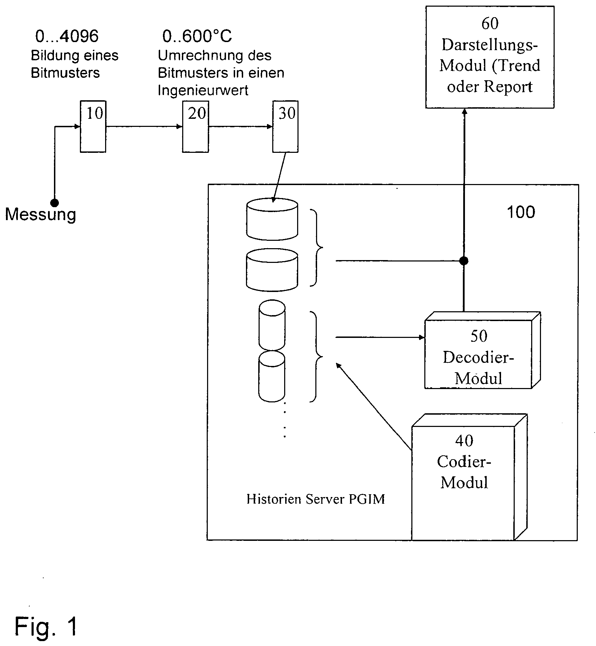

Anhand des in den Figuren 1 und 2 dargestellten Ausführungsbeispieles sollen die Erfindung sowie vorteilhafte Ausgestaltungen und Verbesserungen der Erfindung näher erläutert und beschrieben werden.

Es zeigen:
- **Fig.** 1: eine Ausführungsform des erfindungsgemäßen Systems zur verlustfreien Verarbeitung von Prozesswerten einer technischen Anlage oder eines technischen Prozesses,
- **Fig.** 2: einen beispielhaften Verfahrensablauf zur verlustfreien Kompression von Prozesswerten einer technischen Anlage oder eines technischen Prozesses,
- **Fig.** 3: einen beispielhaften Verfahrensablauf zur Dekompression der komprimierten Datei, und
- **Fig.** 4: einen beispielhaften Verlauf von ausgewählten Prozess- oder Signalwerten und entsprechende Komprimierungsergebnisse für verschiedene Zeitbereiche.

In **Fig. 1** ist eine Ausführungsform des erfindungsgemäßen Systems zur verlustfreien Verarbeitung von Prozesswerten gezeigt, welches in einem Prozessleitsystem einer technischen Anlage oder eines technischen Prozesses integriert ist

Das erfindungsgemäße System umfasst eine Erfassungseinrichtung 10, die vorzugsweise als Ein/- Ausgabeeinheit mit einer Auflösung von beispielsweise 12 Bit ausgeführt ist, dass heißt aus einer gemessenen Spannung wird ein Bitmuster erzeugt, das einem Zahlenbereich von 0 bis 4096 entspricht. Die Erfassungseinrichtung 10 erfasst die aus dem Prozess oder der Anlage bereitgestellten Prozesswerte somit als digitale Daten. Mittels einer Verarbeitungseinheit 20, die mit der Erfassungseinheit 10 verbunden ist, werden archivierbare Daten erzeugt, indem die erfassten Prozesswerte als Rohdaten jeweils in einen sogenannten Ingenieurwert umgewandelt werden. Dazu wird den Prozesswerten jeweils eine physikalische Einheit (z.B. °C) und ein Messbereich (z.B. 0 bis 600°C) zugeordnet und der von der Ein/- Ausgabeeinheit 10 erfasste Zahlenwert wird entsprechend transformiert, indem beispielsweise aus dem erfassten Wert 2048 im vorliegenden Beispiel 300°C werden, wobei die Zahl 300 als IEEE-Double Wert dem System zur Verfügung steht.

Eine im erfindungsgemäßen System integrierte Archivierungsfunktion 30 prüft jeden von der Erfassungseinheit 10 bereitgestellten und in einen Ingenieurwert umgewandelten Rohwert, ob dieser ein vorgegebenes Toleranzband überschreitet und speichert dann diesen Rohwert in 2-Tagesdateien im Rohdatenformat, wobei der Rohwert einen Zeitstempel, einen Wert im IEEE-Double-Format und Status im 16 Bit Integer Format aufweist.

Die nachfolgende Tabelle 1 zeigt den Aufbau der Rohdatendatei, wobei die Anzahl der Bytes dem Produkt aus der Anzahl der Prozesswerte mit 18 Bytes pro Messwert entspricht. Jede Datei enthält im nachfolgenden Beispiel die Werte von maximal zwei Tagen.

**Tabelle 1**

| Zeitstempel | Datenwert | Datentyp |
|---|---|---|
| Timestamp (IEEE Double, 64 Bit) | Value (IEEE Double, 64 Bit) | Status (16 Bit) |
| Timestamp (IEEE Double, 64 Bit) | Value (IEEE Double, 64 Bit) | Status (16 Bit) |
| Timestamp (IEEE Double, 64 Bit) | Value (IEEE Double, 64 Bit) | Status (16 Bit) |
| Timestamp (IEEE Double, 64 Bit) | Value (IEEE Double, 64 Bit) | Status (16 Bit) |
| Timestamp (IEEE Double, 64 Bit) | Value (IEEE Double, 64 Bit) | Status (16 Bit) |

Die Speicherung der vom technischen Prozess oder der technischen Anlage bereitgestellten Daten als Rohdaten erfolgt zeitlich gesplittet in eigenständigen Dateien pro Messpunkt in einem Historienserver 10 ohne eine Komprimierung der Daten.

Im Historienserver 100 ist ein Codiermodul 40 integriert, welches entkoppelt und individuell nach und nach die im Rohdatenformat gespeicherten Rohdaten komprimiert, wodurch die Rohdaten parallel und unabhängig von ihrer eigentlichen Archivierung in ein komprimiertes Format umgewandelt werden.

Das Codiermodul 40 wirkt mit einem Decodiermodul 50 zusammen, welches ebenfalls im Historienserver 100 integriert ist. Das Decodiermodul 50 ist dafür vorgesehen, die vom Codiermodul 40 komprimierten Daten nach einer Anforderung vom Prozessleitsystem zu entpacken und die entpackten Daten sowie weitere verfügbare Daten im Rohdatenformat einem Darstellungsmodul 60, welches beispielsweise einen Trend oder einem Report abbildet, zur weiteren Verarbeitung bereitzustellen.

Somit werden beim Lesen der Daten aus dem Codiermodul 40, beispielsweise für die Darstellung eines Langzeittrends oder eines Reports die komprimierten oder gepackten Daten über das Decodiermodul 50 gewandelt und wie die noch verfügbaren Rohdaten und gemeinsam an den Trend oder den Report 60 geschickt.

**Fig. 2** zeigt einen beispielhaften Verfahrensablauf zur verlustfreien Kompression von Prozesswerten einer technischen Anlage oder eines technischen Prozesses.

Ausgehend von der vorab beschriebenen Struktur bzw. dem Inhalt der Rohdateien und der Entstehungskette der Daten werden die nachfolgend beschriebenen Kodiermethoden zur Komprimierung der Rohdaten.

Die in einem ersten Schritt 1 von der Erfassungseinheit 10 eingelesenen Rohdaten, welche als im IEEE-Double-Format vorliegende Prozesswerte gespeichert werden, basieren aufgrund der von der Erfassungseinheit 10 und der Verarbeitungseinheit 20 ausgeführten Erfassungskette immer noch auf digitalen Werten mit einer Auflösung von beispielsweise 12 Bit. Folglich ist zu erwarten, dass bei 12 Bit maximal 4096 verschiedene Werte in einer Datei auftreten. Ausnahmen bilden lediglich die in der Prozessverarbeitung durch arithmetische Operationen gebildeten errechneten Werte. Diese zeigen einen erhöhten Wertebereich, allerdings nur um einen Faktor 3. Ein Toleranzband bei der Erfassung ist in der Regel so geschaltet, dass ein oder zwei weitere Bits gefiltert werden, womit die zu erwartende Daten- oder Wertemenge entsprechend sinkt.

Somit werden erfindungsgemäß in einem zweiten Schritt 2 in einem CreateValueDictionary die Rohwerte aus der Datei, in einem ersten Verzeichnis so aufbereitet, so dass nur noch die Verzeichnisindices gespeichert werden.

In einem dritten Schritt 3 wird ein zweites Verzeichnis aller vorkommenden Wertedifferenzen aus jeweils zwei Rohwerten erstellt. Da sich die Werte zwischen zwei Rohwerten typischerweise nicht sprunghaft ändern, ist die Wahrscheinlichkeit groß, dass das zweite Verzeichnis noch weniger Werte enthält als das erste Verzeichnis. Beide Verzeichnisse werden nun miteinander verglichen und das Verzeichnis, welches die wenigsten Werte aufweist, wird ausgewählt und als Messwerteverzeichnis (ValueDictionary) der weiteren Verarbeitung bereitgestellt.

In einem vierten Schritt 4 wird eine ähnliche Vorgehensweise in einem CreateTimestampDictionary für die Zeitauflösung durchgeführt. Bei der Speicherung der Rohwerte aus dem Prozess wird typischerweise die Zeitauflösung exakt auf Millisekunden genau gestempelt. Weiterhin treten in einer Datei annähernd gleiche Zeitdifferenzen auf. Also werden im CreateTimestampDictionary grundsätzlich zuerst alle Zeitstempel in Millisekunden umgerechnet und dann die entsprechenden Differenzen, im folgenden mit als Zeitdifferenzen bezeichnet, gebildet. Daraus wird ein Verzeichnis der Zeitdifferenzen, das Zeitstempelverzeichnis (TimestampDictionary), erstellt.

Beim Packen des Zeitstempelverzeichnisses in einem fünften Schritt 5 kommt der nachfolgend beschriebene Effekt zum Tragen. Beim Einlesen von schnellen Signalen werden typischerweise relativ kontinuierlich die entsprechenden Werte bereitgestellt, beispielsweise wird in einem Zeitbereich von 0,5 bis 0,8 Sekunden ein neuer Wert eingelesen. Folglich ist davon auszugehen, dass die meisten Zeitdifferenzen in einem nahen Differenzen-Zeitfenster liegen und somit im Zeitstempelverzeichnis in diesem Bereich nahezu alle Millisekundenzahlen vorliegen. Daher wird hier, bevor die Bitkodierung der Wert-Indices beginnt, das Zeitstempelverzeichnis aufsteigend sortiert, und es werden die entsprechenden Zeitdifferenzen gebildet. Dabei entstehen sogenannte lange Einer-Ketten der aufsteigenden Werte, die wiederum schnell mit einer Lauflängenkodierung komprimiert werden.

Die Lauflängenkodierung ist ein sehr einfacher verlustfreier Kommpressionsalgorithmus für die in digitaler Form vorliegenden Daten und ist besonders gut geeignet, Wiederholungen oder Sequenzen von gleichen Werten verkürzt darzustellen. Liegt eine Wiederholung vor, wird die Anzahl der Wiederholungen sowie der wiederholte Wert gespeichert.

In einer Ausgestaltung der Erfindung werden vorab die Zeiteinheiten als Differenzen kodiert. Je langsamer ein Signal ist, also je weniger Änderungen das Signal aufweist, umso größer und verschiedener sind die Zeitdifferenzen zwischen den Werten.

Folglich wächst das Zeitstempelverzeichnis obwohl eine geringere Anzahl von Werten bzw. Daten für ein entsprechendes Signal vorliegen. Bedingt durch den erhöhten Bedarf des Zeitstempelverzeichnisses zusammen mit den zu kodierenden Indices an Daten für die Zeiteinheiten werden die Zeiteinheiten sofort als Zeitdifferenzen kodiert. Somit wird in vorteilhafter Weise die Bearbeitung eines Verzeichnisses eingespart, indem die benötigten Bits für die Kodierung aus der maximalen Zeitdifferenz bestimmt werden. Das Codiermodul 40 wählt in diesem Fall das Verzeichnis mit dem kompakteren Format aus.

In einem sechsten Schritt 6 wird während der Zeitkodierung geprüft, ob ein Umformen der Bytes in Längsrichtung unter Umständen effektiver ist: Da alle Zeiten aufsteigende Zeiten sind, ergeben sich hier ebenfalls lange Ketten gleichartiger Bytes, die sehr gut mittels der vorab beschriebenen Lauflängenkodierung komprimierbar sind. Diese Vorgehensweise ist besonders vorteilhaft, wenn sehr unregelmäßige und wenige Daten pro Datei vorliegen.

Bei der Statusinformation (16 Bit Integer) wird in der Regel ebenfalls die vorab beschriebene Lauflängenkodierung durchgeführt.

In einem weiteren Schritt 7 werden neben dem bereits erstellten Messwerteverzeichnis und dem erstellten Zeitstempelverzeichnis in der komprimierten Datei die Indices für die Werte kodiert. Hier hat sich gezeigt, dass eine Kodierung nach den üblicherweise verwendeten Verfahren nach Shannon-Fano oder Huffman im Vergleich zu einer starr ermittelten Bitfeld-Größe keine bessere und teils sogar etwas schlechtere Ergebnisse liefert.

Die Shannon-Fano-Kodierung und Huffman-Kodierung beruhen dabei auf einer Art der Entropiekodierung ist, die jedem einzelnen Zeichen eines Textes eine unterschiedlich lange Folge von Bits zuordnet. Da eine bestimmte Mindestanzahl von Bits notwendig ist, um alle Zeichen voneinander zu unterscheiden, kann die Anzahl der Bits, die den Zeichen zugeordnet werden, nicht unbegrenzt klein werden.

Das nunmehr verwendete konstante Kodierschema, bei dem immer gleich viele Bits für einen Index verwendet werden, hat zudem den Vorteil, dass das Kodierschema wesentlich schneller entpackt wird, da kein Binärbaum durchlaufen werden muss, um den entsprechenden Index zu bilden.

Die so in einem letzten Schritt 8 erzeugte komprimierte Datei weist den in der Tabelle 2 gezeigten Aufbau auf:

**Tabelle 2**

| Differenzstartwerte und Zeiger auf alle Struktur-Blöcke |
|---|
| Verzeichnis der Zeitdifferenzen |
| Verzeichnis der Wertdifferenzen |
| Bitkodierte Zeit-Indices |
| Bitkodierte Zeit-Indices |
| lauflängenkodierte Statusinformation |

Die so erzielte Kompression verringert die Rohdaten von ca. 100% auf ca. 18 ... 32 %, was einem Faktor von 3 bis 5 entspricht, mit dem die Rohdatenmenge verringert wird. Berücksichtigt man die durch das Toleranzband schon vorher erzielte Komprimierung, welche ca. einem Faktor von 2 bis 6 bei der Verringerung der Rohdatenmenge entspricht, ergibt eine maximale Gesamtkomprimierung um ca. das Dreißigfache (ca. 5 * 6 = 30) der ursprünglich vorhandenen Rohdatenmenge, wobei beispielhafte mittlere erreichbare Werte bei einem Faktor 8 liegen.

Ein wesentlicher Vorteil der Erfindung beruht darauf, dass obwohl das vorgeschaltete Toleranzband zwar eine verlustbehaftete Komprimierung darstellt, die abrechnugsrelevanten Daten eindeutig wiederherstellbar sind, da die vorabgenannten Verfahrensschritte 2 bis 7 erst nach der Auswahl der innerhalb des vorgegebenen Toleranzband befindlichen archivierbaren Daten durchgeführt werden.

Die in einem Anlageninformationssystem typischerweise ausgeführte Ermittlung der abrechnungsrelevanten Daten zur Laufzeit hat somit das exakt gleiche Resultat wie die in der komprimierten Historie bestimmten Werte.

Um die Daten der komprimierten Datei dem Anlageninformationssystem zur weiteren Verarbeitung, beispielsweise zur Anzeige des Verlaufes eines Prozesswertes über einen vorgegebenen Zeitbereich, zur Verfügung zu stellen, werden die Daten der komprimierten Datei nach einer Anforderung vom Anlageninformationssystem mittels des vom Historienserver 100 bereitgestellten Decodiermoduls 50 nach dem in **Fig. 3** dargestellten Verfahrensablauf dekomprimiert.

**Fig. 3** zeigt einen beispielhaften Verfahrensablauf zur Dekompression der komprimierten Datei, wobei in einem ersten Verfahrensschritt 11 die erzeugte komprimierte Datei vom Decodiermodul 50 gelesen wird.

In einem nachfolgenden Schritt 12 werden das Zeitstempelverzeichnis (TimestampDictionary) und das Messwerteverzeichnis (ValueDictionary) erzeugt sowie die Werte-Indices und Timestamp-Indices aus dem Historienserver 100 gelesen und Werte und Timestamps erzeugt. Nach einer Decodierung der lauflängenkodierten Statusinformationen werden die Daten in ihrem Rohdatenformat wiederhergestellt.

In einem letzten Schritt 13 werden die so vom Decodiermodul 50 bereitgestellten dekomprimierten Daten in ihrem Rohdatenformat sowie weitere während der Erzeugung der komprimierten Datei eingelesene Daten im Rohdatenformat einem Darstellungsmodul 60 zur weiteren Verarbeitung übermittelt.

Beim Lesen der vom Decodiermodul 50 bereitgestellten dekomprimierten Daten aus dem komprimierten Bereich, beispielsweise für die Darstellung eines Langzeittrends, werden somit die gepackten Daten über das Decodiermodul 50 gewandelt und mit den noch verfügbaren Rohdaten zusammen an den Trend 60 geschickt.

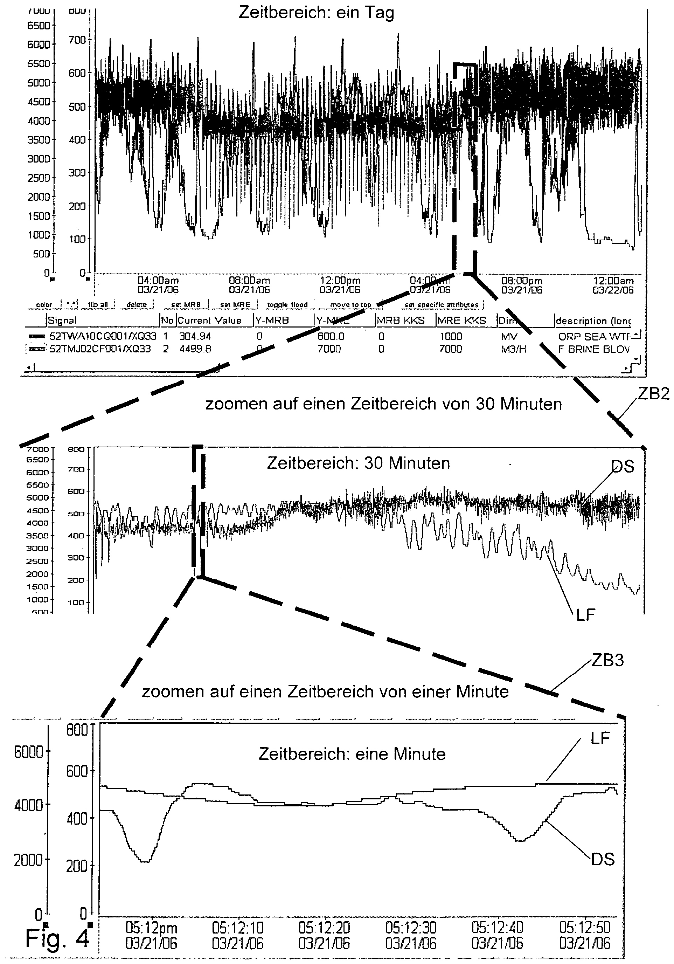

**Fig. 4** zeigt den Verlauf von ausgewählten Prozess- oder Signalwerten und entsprechende Komprimierungsergebnisse für einen Tag, für einen Zeitbereich von 30 Minuten und für einen Zeitbereich von einer Minute am Beispiel eines typischen schnellen Drucksignals DS (Ta=250ms) und einer Leitfähigkeitsmessung eines Salzgehaltes LF einer Meerwasserentsalzungsanlage, die ein beispielhaftes mittelschnelles Signal (Ta=1 sec) darstellt.

Die Ergebnisse der Kommpression der in **Fig. 4** dargestellten Signalverläufe zeigt nachfolgende Tabelle 3:

**Tabelle 3**

| Kurve | Raw-Tripel | dt.Dict | v.Dict | dv.Dict | dt.bits | v.bits | dv.bits | % dt-v | % dt-dv | % S&F dt-dv | % Win Zip |
|---|---|---|---|---|---|---|---|---|---|---|---|
| DS | 178304 | 3539 | 2408 | 515 | 13 | 12 | 10 | 22,4 | 20,6 | 19,7 | 49,7 |
| LF | 16704 | 7195 | 2081 | 76 | 13 | 12 | 7 | 22.3 | 27.8 | 27.3 | 52,8 |

Die in der Tabelle 3 verwendeten Abkürzungen sind nachfolgender Aufzählung zu entnehmen:
- Raw-Tripel:: Anzahl der Zeit/Wert/Status-Tripel, die in 2-Tagesdateien enthalten sind und die Datenbasis der Signalverläufe DS, LF darstellen
- dt.Dict:: alle enthaltenen Zeitdifferenzen
- v.Dict:: alle enthaltenen Werte
- dv.Dict:: alle enthaltenen Wertdifferenzen
- dt.bits:: zur Zeit-Kodierung benötigte Bits für einen Index
- v.bits:: zur Wert-Kodierung benötigte Bits für einen Index
- dv.bits:: zur Differenzwert-Kodierung benötigte Bits für einen Index
- %dt-v:: erreichte Kompressionsrate in %, incl. Time/Value-Dictionary
- %dt-dv:: erreichte Kompressionsrate in %, wenn Differenzwerte kodiert werden
- %WinZip:: als Vergleich eine mit WinZip erzielte Kompressionsrate in %

## Patentansprüche

1. Verfahren zur verlustfreien Verarbeitung von Prozesswerten, welches in einem Prozessleitsystem einer technischen Anlage oder eines technischen Prozesses integriert wird, wobei dass
- die Prozesswerte als Rohdaten mittels einer Erfassungseinheit erfasst werden, aus den erfassten Rohdaten nach Zuordnung einer physikalischen Einheit und eines Messbereiches zum jeweiligen Prozesswert archivierbare Daten erzeugt werden, die in einem vorgegebenen Toleranzband befindlichen archivierbaren Daten mittels einer Archivierungsfunktion ausgewählt werden, und die ausgewählten Daten in einem Rohdatenformat in einem Historienserver gespeichert werden, **dadurch gekennzeichnet, dass**
- die im Rohdatenformat vorliegenden ausgewählten Daten mittels eines vom Historienserver bereitgestellten Codiermoduls zeitverzögert zu ihrer Speicherung im Historienserver fortlaufend über ein Zeitstempelverzeichnis, ein Messwerteverzeichnis, bitkodierte Zeit-Indices und eine lauflängenkodierte Statusinformation komprimiert werden,
- nach einer Anforderung vom Prozessleitsystem die komprimierten Daten mittels eines vom Historienserver bereitgestellten Decodiermodul gelesen und dekomprimiert werden, indem aus den komprimierten Daten das Zeitstempelverzeichnis und das Messwerteverzeichnis erzeugt werden,
- Werte-Indices und Timestamp-Indices aus dem Historienserver gelesen und Werte und Zeitstempel erzeugt werden,
- nach einer Decodierung der lauflängenkodierten Statusinformationen die Daten in ihrem Rohdatenformat wiederhergestellt werden, und
- die vom Decodiermodul bereitgestellten dekomprimierten Daten in ihrem Rohdatenformat sowie weitere während der Erzeugung der komprimierten Datei eingelesene Daten im Rohdatenformat einem Darstellungsmodul zur weiteren Verarbeitung übermittelt werden.

2. Verfahren nach Anspruch 1, **dadurch gekennzeichnet, dass** die Anforderung zum Dekomprimieren der komprimierten Daten und zur Bereitstellung weiterer verfügbarer Daten im Rohdatenformat automatisch oder ereignisabhängig vom Prozessleitsystem bereitgestellt wird.

3. Verfahren nach Anspruch 1 oder 2, **dadurch gekennzeichnet, dass** die Daten im Rohdatenformat zeitlich gesplittet in eigenständigen Dateien pro Messpunkt im Historienserver 10 ohne eine Komprimierung gespeichert werden.

4. Verfahren nach einem der vorherigen Ansprüche, **dadurch gekennzeichnet, dass** die Komprimierung der im Rohdatenformat vorliegenden Daten mit einer zeitlichen Verzögerung individuell für einzelne Prozesswerte oder Gruppen bzw. Klassen von Prozesswerten eingestellt wird.

5. Verfahren nach einem der vorherigen Ansprüche, **dadurch gekennzeichnet, dass** die Prozesswerte erst im Rohdatenformat gespeichert werden und zeitversetzt nach und nach mit einer konfigurierbaren Verzögerung in ein komprimiertes Format umgewandelt werden.

6. Verfahren nach einem der vorherigen Ansprüche, **dadurch gekennzeichnet, dass** die dekomprimierten Daten sowie die weiteren verfügbaren Daten im Rohdatenformat einem Modul zur Trenddarstellung oder einem Modul zur Abbildung eines Reports bereitgestellt werden.

7. System zur verlustfreien Verarbeitung von Prozesswerten, welches in einem Prozessleitsystem einer technischen Anlage oder eines technischen Prozesses integriert ist, wobei
- eine Erfassungseinrichtung die Prozesswerte als Rohdaten erfasst, die Erfassungseinheit mit einer Verarbeitungseinheit zusammenwirkt, welche aus den erfassten Rohdaten nach Zuordnung einer physikalischen Einheit und eines Messbereiches zum jeweiligen Prozesswert archivierbare Daten erzeugt, die Verarbeitungseinheit mit einer Archivierungsfunktion zusammenwirkt, welche prüft, ob die archivierbaren Daten ein vorgegebenes Toleranzband überschreiten, die Archivierungsfunktion die innerhalb des Toleranzbandes befindlichen archivierbaren Daten auswählt und die archivierbaren Daten in einem Rohdatenformat in einem Historienserver speichert, **dadurch gekennzeichnet, dass**
- der Historienserver ein Codiermodul aufweist, welches die im Rohdatenformat vorliegenden ausgewählten Daten zeitverzögert zu ihrer Speicherung im Historienserver fortlaufend über ein Zeitstempelverzeichnis, ein Messwerteverzeichnis, bitkodierte Zeit-Indices und eine lauflängenkodierte Statusinformation komprimiert,
- das Codiermodul mit einem Decodiermodul zusammenwirkt, dass die vom Codiermodul komprimierten Daten nach einer Anforderung vom Prozessleitsystem liest und dekomprimiert, indem das Codiermodul aus den komprimierten Daten das Zeitstempelverzeichnis und das Messwerteverzeichnis erzeugt, Werte-Indices und Timestamp-Indices aus dem Historienserver liest und Werte und Zeitstempel erzeugt, nach einer Decodierung der lauflängenkodierten Statusinformationen die Daten in ihrem Rohdatenformat wiederherstellt, und
- die dekomprimierten Daten sowie weitere verfügbare Daten im Rohdatenformat einem Darstellungsmodul zur weiteren Verarbeitung bereitstellt.

8. System nach Anspruch 7, **dadurch gekennzeichnet, dass** das Prozessleitsystem die Anforderung zum Dekomprimieren der komprimierten Daten und zur Bereitstellung weiterer verfügbarer Daten im Rohdatenformat automatisch oder ereignisabhängig bereitstellt.

9. System nach Anspruch 7 oder 8, **dadurch gekennzeichnet, dass** die Daten im Rohdatenformat zeitlich gesplittet in eigenständigen Dateien pro Messpunkt in einem Historienserver 10 ohne eine Komprimierung speicherbar sind.

10. System nach einem der Ansprüche 7 bis 9, **dadurch gekennzeichnet, dass** die Komprimierung der im Rohdatenformat vorliegenden Daten mit einer zeitlichen Verzögerung individuell für einzelne Prozesswerte oder Gruppen bzw. Klassen von Prozesswerten einstellbar ist.

11. System nach einem der Ansprüche 7 bis 10, **dadurch gekennzeichnet, dass** der Historienserver eine Datenbank zur Sammlung von Prozess- oder Messdaten, Meldungen und Berichten, zur Langzeitspeicherung und zur Archivierung der gesammelten Daten ist, wobei die gesammelten Daten sowie abgeschlossene Berichte in festgelegten Zeitabständen speicherbar sind.

12. System nach einem der Ansprüche 7 bis 11, **dadurch gekennzeichnet, dass** der Historienserver dafür vorgesehen ist, die Prozesswerte erst im Rohdatenformat zu speichern und mit einer konfigurierbaren Verzögerung die gespeicherten Daten in ein komprimiertes Format umwandelt.

13. System nach einem der Ansprüche 7 bis 12, **dadurch gekennzeichnet, dass** das Darstellungsmodul die dekomprimierten Daten sowie die weiteren verfügbaren Daten im Rohdatenformat als Trend oder Report abbildet.

## Claims

1. Method for the loss-free processing of process values, which is integrated in a process control system of a technical installation or a technical process, wherein
- the process values are recorded in the form of raw data using a recording unit, archivable data are generated from the recorded raw data after a physical unit and a measuring range have been assigned to the respective process value, the archivable data in a predefined tolerance band are selected using an archiving function, the selected data are stored in a raw data format in a history server, **characterized in that**
- the selected data in the raw data format are continuously compressed via a time stamp directory, a measured value directory, bit-coded time indices and an item of run-length-coded status information with a time delay with respect to their storage in the history server using a coding module provided by the history server,
- following a request from the process control system, the compressed data are read and decompressed using a decoding module provided by the history server by generating the time stamp directory and the measured value directory from the compressed data
- value indices and time stamp indices are read from the history server and values and time stamps are generated,
- following decoding of the run-length-coded status information, the data are restored in their raw data format, and
- the decompressed data in their raw data format provided by the decoding module and further data, read in during the generation of the compressed file, in the raw data format are transmitted to a display module for further processing.

2. Method according to Claim 1, **characterized in that** the request to decompress the compressed data and to provide further available data in the raw data format is provided by the process control system automatically or on the basis of an event.

3. Method according to Claim 1 or 2, **characterized in that** the data in the raw data format are stored in the history server 100, in a manner split in terms of time into independent files for each measuring point, without compression.

4. Method according to one of the preceding claims, **characterized in that** the compression of the data in the raw data format is set individually for individual process values or groups or classes of process values with a temporal delay.

5. Method according to one of the preceding claims, **characterized in that** the process values are first stored in the raw data format and are gradually converted, in a temporally offset manner, into a compressed format with a configurable delay.

6. Method according to one of the preceding claims, **characterized in that** a module for displaying a trend or a module for depicting a report is provided with the decompressed data and the further available data in the raw data format.

7. System for the loss-free processing of process values, which is integrated in a process control system of a technical installation or a technical process, wherein
- a recording device records the process values in the form of raw data, the recording unit interacts with a processing unit which generates archivable data from the recorded raw data after a physical unit and a measuring range have been assigned to the respective process value, the processing unit interacts with an archiving function which checks whether the archivable data exceed a predefined tolerance band, the archiving function selects the archivable data within the tolerance band and stores the archivable data in a raw data format in a history server, **characterized in that**
- the history server has a coding module which continuously compresses the selected data in the raw data format via a time-stamp directory, a measured value directory, bit coded time indices and an item of run-length-coded status information with a time delay with respect to their storage in the history server,
- the coding module interacts with a decoding module that reads and decompresses the data compressed by the coding module following a request from the process control system by virtue of the coding module generating the time stamp directory and the measured value directory from the compressed data, reading value indices and time stamp indices from the history server and generating values and time stamps and restoring the data in their raw data format following decoding of the run-length-coded status information and
- provides a display module with the decompressed data and further available data in the raw data format for further processing.

8. System according to Claim 7, **characterized in that** the process control system provides the request to decompress the compressed data and to provide further available data in the raw data format automatically or on the basis of an event.

9. System according to Claim 7 or 8, **characterized in that** the data in the raw data format can be stored in a history server 100, in a manner split in terms of time into independent files for each measuring point, without compression.

10. System according to one of Claims 7 to 9, **characterized in that** the compression of the data in the raw data format can be individually set for individual process values or groups or classes of process values with a temporal delay.

11. System according to one of Claims 7 to 10, **characterized in that** the history server is a database for collecting process or measurement data, messages and reports, for the long-term storage and archiving of the collected data, the collected data and completed reports being able to be stored at defined intervals of time.

12. System according to one of Claims 7 to 11, **characterized in that** the history server is provided for the purpose of first storing the process values in the raw data format and converting the stored data into a compressed format with a configurable delay.

13. System according to one of Claims 7 to 12, **characterized in that** the display module depicts the decompressed data and the further available data in the raw data format as a trend or report.

## Revendications

1. Procédé permettant de traiter sans perte des valeurs de processus, qui sont intégrées dans un système de contrôle de processus d'installation technique ou de processus technique, dans lequel
- les valeurs de processus sont détectées sous forme de données brutes au moyen d'une unité de détection, des données archivables sont produites à partir des données brutes détectées, après allocation d'une unité physique et d'une plage de mesure à chaque valeur de processus, les données archivables qui se trouvent dans une bande de tolérance prédéterminée sont sélectionnées au moyen d'une fonction d'archivage et les données sélectionnées sont mémorisées dans un serveur d'historique, dans un format de données brutes, **caractérisé en ce que**
- les données sélectionnées figurant sous format de données brutes sont comprimées en continu de manière temporisée, au moyen d'un module de codage fourni par le serveur d'historique, en vue de leur mémorisation dans le serveur d'historique, par l'intermédiaire d'un répertoire de marqueurs temporels, d'un répertoire de valeurs de mesure, d'indices temporels codés par codage binaire et d'une information d'état codés par codage de longueur de plage,
- suite à une demande du système de contrôle de processus, les données comprimées sont lues et décomprimées au moyen d'un module de décodage fourni par le serveur d'historique, le répertoire de marqueurs temporels et le répertoire de valeurs de mesure étant produits à partir des données comprimées,
- des indices de valeurs et des indices de marqueurs temporels sont lus sur le serveur d'historique et des valeurs et des marqueurs temporels sont produits,
- suite à un décodage des informations d'état codées par codage de longueur de plage, les données sont ramenées dans leur format de données brutes, et
- les données décomprimées fournies par le module de décodage ainsi que d'autres données lues en entrée pendant la production des fichiers comprimés sont transmises dans le format de données brutes à un module de représentation en vue d'un traitement ultérieur.

2. Procédé selon la revendication 1, **caractérisé en ce que** la demande de décompression des données comprimées et de fourniture d'autres données disponibles dans le format de données brutes est fournie automatiquement ou en fonction d'événements par le système de contrôle de processus.

3. Procédé selon la revendication 1 ou 2, **caractérisé en ce que** les données en format de données brutes sont stockées sans compression à l'état décomposé temporellement en des fichiers indépendants en chaque point de mesure dans le serveur d'historique 10.

4. Procédé selon l'une quelconque des revendications précédentes, **caractérisé en ce que** la compression des données figurant en format de données brutes est mise en oeuvre individuellement avec une temporisation pour des valeurs de processus individuelles ou des groupes ou des classes de valeurs de processus.

5. Procédé selon l'une quelconque des revendications précédentes, **caractérisé en ce que** les valeurs de processus sont tout d'abord mémorisées dans un format de données brutes puis sont converties avec une temporisation configurable en un format comprimé.

6. Procédé selon l'une quelconque des revendications précédentes, **caractérisé en ce que** les données décomprimées ainsi que les autres données disponibles sont fournies dans un format de données brutes à un module de représentation de tendances ou à un module d'établissement de rapport.

7. Système permettant de traiter sans perte des valeurs de processus, qui sont intégrées dans un système de contrôle de processus d'installation technique ou de processus technique, dans lequel
- un dispositif de détection détecte les valeurs de processus sous forme de données brutes, l'unité de détection coopère avec une unité de traitement qui produit des données archivables à partir des données brutes détectées, après allocation d'une unité physique et d'une plage de mesure à chaque valeur de processus, l'unité de traitement coopère avec une fonction d'archivage qui vérifie si les données archivables dépassent une bande de tolérance prédéterminée, la fonction d'archivage sélectionne les données archivables qui se trouvent à l'intérieur de la bande de tolérance et les données archivables sont mémorisées dans un serveur d'historique, dans un format de données brutes, **caractérisé en ce que**
- le serveur d'historique comporte un module de codage qui comprime en continu de manière temporisée les données sélectionnées figurant sous format de données brutes, en vue de leur mémorisation dans le serveur d'historique, par l'intermédiaire d'un répertoire de marqueurs temporels, d'un répertoire de valeurs de mesure, d'indices temporels codés par codage binaire et d'une information d'état codée par codage de longueur de plage,
- le module de codage coopère avec un module de décodage qui lit et décomprime les données comprimées par le module de codage suite à une demande du système de contrôle de processus, le module de codage produisant le répertoire de marqueurs temporels et le répertoire de valeurs de mesure à partir des données comprimées, lisant des indices de valeurs et des indices de marqueurs temporels sur le serveur d'historique et produisant des valeurs et des marqueurs temporels, suite à un décodage des informations d'état codées par codage de longueur de plage, et ramenant les données dans leur format de données brutes, et
- les données décomprimées ainsi que d'autres données disponibles sont fournies en format de données brutes à un module de représentation en vue d'un traitement ultérieur.

8. Système selon la revendication 7, **caractérisé en ce que** le système de contrôle de processus fournit automatiquement ou en fonction d'événements la demande de décompression des données comprimées et de fourniture d'autres données disponibles dans le format de données brutes.

9. Système selon la revendication 7 ou 8, **caractérisé en ce que** les données en format de données brutes peuvent être mémorisées sans compression dans le format de données brutes à l'état décomposé temporellement en des fichiers indépendants en chaque point de mesure dans le serveur d'historique 10.

10. Système selon l'une quelconque des revendications 7 à 9, **caractérisé en ce que** la compression des données se présentant en format de données brutes peut être mise en oeuvre individuellement avec une temporisation pour des valeurs de processus individuelles ou des groupes ou des classes de valeurs de processus.

11. Système selon l'une quelconque des revendications 7 à 10, **caractérisé en ce que** le serveur d'historique est une base de données destinée à rassembler des données de processus ou de mesure, des notifications et des rapports, en vue d'une mémorisation à long terme et d'un archivage des données rassemblées, dans lequel les données rassemblées ainsi que les rapports terminés peuvent être mémorisés à des intervalles de temps établis.

12. Système selon l'une quelconque des revendications 7 à 11, **caractérisé en ce que** le serveur d'historique est prévu pour mémoriser en premier lieu les valeurs de processus dans un format de données brutes puis pour convertir les données mémorisées avec une temporisation configurable dans un format comprimé.

13. Système selon l'une quelconque des revendications 7 à 12, **caractérisé en ce que** le module de représentation représente les données décomprimées ainsi que les autres données disponibles dans un format de données brutes en tant que tendance ou rapport.
